# EUROPEAN PATENT SPECIFICATION

(11) **EP 2 594 838 B1**
(45) Date of publication and mention of the grant of the patent: **17.08.2016**
(21) Application number: 11189927.4
(22) Date of filing: 21.11.2011
(51) Int. Cl.: F16N 7/32, F16N 7/30

(54) **Arrangement and method for lubricating moving parts in a mechanical device**
Vorrichtung und Verfahren zum Schmieren beweglicher Teile in einer mechanischen Vorrichtung
Dispositif et procédé pour lubrifier des pièces mobiles dans un dispositif mécanique

(43) Date of publication of application: 22.05.2013
(73) Proprietor: VBG Group AB (Publ), 462 28 Vänersborg (SE)
(72) Inventor: Thorén, Anders, 460 64 Frändefors (SE); Andersson, Oscar, 462 31 Vänersborg (SE)
(74) Representative: Awapatent AB

(56) References cited:
- DE-A1- 4 208 063
- DE-A1- 19 915 265
- DE-U1- 9 112 244
- GB-A- 191 315 352

## Description

### Field of the invention

The present invention relates to the field of lubrication, and more specifically to a lubricating arrangement adapted to lubricate moving parts in a mechanical device. The invention also relates to a corresponding method for providing lubricant to moving parts of the mechanical device.

### Background of the invention

In order to increase durability and prevent failure of moving parts in e.g. vehicles, continuous lubrication is of importance. Moving parts such as rotating shafts, cylinder pistons, bearings, etc. are during operation exposed to friction loads. Lubrication reduces the friction loads and thus increases durability and reduces the time interval for repairment or replacement of the parts. Some of the moving parts in e.g. vehicles are not automatically and continuously provided with lubrication and it is hence up to each operator of the vehicle to perform the lubrication. However, vehicle operators often tend to neglect or forget to perform the lubrication. Therefore, it is desirable to provide an arrangement that automatically lubricates the moving parts of e.g. the vehicle.

In order to solve the above mentioned problem, US 3 985 205 discloses an automatic vehicle lubrication system. The system is arranged to provide lubrication to various lubrication points of a vehicle during time intervals. When the ignition key is turned on and the hand brake is released, the system indicates that the vehicle is going to be driven. Thereafter, a counter starts to count at an even rate and when the counter has reached a predetermined period of time, lubrication of the lubrication points is started. A signal is transmitted to a solenoid valve which opens to permit air to flow from an air tank to a pump, which is actuated to pump lubricant from a lubricant reservoir to the various lubrication points. More specifically, when the lubrication sequence is started, the air in the air tank is arranged to act on a piston in a cylinder of the pump, wherein the pump is arranged downstream of the solenoid valve, to press the piston downwardly rapidly. Lubricant, which is received in the cylinder from the lubricating tank, is thereafter transported under high pressure into the distribution system and further to the lubricating points.

Although the system disclosed in US 3 985 205 tries to solve the problem of providing automatic lubrication, it is in need of further improvement.

DE 42 08 063 relates to a fluid supply system for machine tools. The fluid supply system comprises lubricant sources which are connected to a pressure source by means of conduits and to a valve in a valve arrangement by means of conduit. The pressure source is in turn also connected to a valve in the valve arrangement. The respective conduits are in turn connected to a nozzle.

### Summary of the invention

In view of the above mentioned, an object of the present invention is thus to provide an improved arrangement and method for lubricating moving parts in a mechanical device. The problem is solved by means of a device according to claim 1 and a method according to claim 6.

According to a first aspect of the present invention there is provided a lubricant arrangement for lubricating moving parts in a mechanical device, wherein the lubricant arrangement comprises a first valve connected to a lubricant source, a second valve connected to a pressurized gas source, a first conduit path arranged between the first valve and the mechanical device, and a second conduit path arranged between the second valve and the mechanical device, and a control unit configured to control the first and second valve so that, in a first state of a lubricating cycle, only pressurized gas is provided to the mechanical device.

The present invention is based on the insight that, contrary to the prior art in which only lubricant is provided to the moving parts in need of lubrication, pressurized gas may be provided to the mechanical device prior to providing lubricant. Hereby, pressurized gas may force out e.g. dust particles or dirt that has entered into the mechanical device, prior to providing lubricant.

An advantage of the present invention is, at least, that the pressurized gas source and the lubricant source can be separately and individually connected to the mechanical device. Hereby, pressurized gas may be provided to the mechanical device prior to providing lubricant and thus force out e.g. dust particles or dirt. In prior art solutions, dust particles may tend to remain within the mechanical device when lubricant is applied. Hence, an improved lubricating effect of the moving parts in the mechanical device may be provided since lubricant may be essentially free from particles that otherwise may, for example, form an abrasive paste that may cause an accelerated wear of the device.

The wording "first valve" and "second valve" should be interpreted as two valves which, either independent or in collaboration, are controlled by the control unit to be in an open state or in a closed state, whereas an open state allows for pressurized gas and lubricant to pass through the valves, respectively. Moreover, pressurized gas may for example be compressed air received from e.g. a pressure tank. However, other pressurized gases suitable for pressing out particles from the mechanical device should of course also be interpreted in the scope of the present invention. Also, the lubricant may be any suitable lubricant that fulfils a desired lubricating effect, such as a natural oil, synthetic oil, grease, or a powder lubricant such as copper, aluminium, graphite, etc. The choice of lubricant may of course vary depending on the specific mechanical device to be lubricated or the climate- or environmental conditions where the device is used.

Still further, the first and second conduit paths may merge into a common conduit path at a position downstream the respective valve.

An advantage is, at least, that the lubricant source may be configured in such a way that it may only be sufficient to provide lubricant to the position where the first and second conduit paths merge into the common conduit path. Hence, the lubricant source does not necessarily have to be equipped with such a pressure that enables lubricant to be directly provided to the mechanical device.

Moreover, the control unit may be further configured to control the first and second valve, in a second state of the lubricating cycle, to provide lubricant to the position where the first and second conduit paths coincide. Hereby, as described above, lubricant may be provided to the position where the first and second conduit paths coincide. Thereafter, pressurized gas from the pressurized gas source may force lubricant to the mechanical device.

According to an embodiment, the lubricant source may be a detachable pressurized lubricant container, in fluid connection to the first valve. The wording "in fluid connection" should be interpreted as the pressurized lubricant container continuously provides lubricant to the first valve. Hence, the pressurized lubricant container may be in an open state when connected to the first valve. The wording "open state" should be interpreted as a state where lubricant is provided from the pressurized lubricant container i.e. is being ejected from the lubricant source. For example, an actuator of the lubricant source may be positioned in a delivery state where lubricant is continuously provided to the first valve of the lubricant arrangement by means of e.g. the propellant gas of the can. The control unit hence controls the provision of lubricant to the first conduit path by opening or closing the first valve.

An advantage is that the lubricant source may be easy to replace when being empty. Hence, instead of filling up e.g. a tray with new lubricant, replacement of the empty lubricant source with a new one is carried out in a convenient manner. Also, by having a pressurized lubricant source, the propellant gas of the source may be sufficient to provide lubricant from the source to the position where the first and second conduit paths coincide, i.e. there is no need of connecting the lubricant source to e.g. an external pressurized source or siphon etc. Some prior art solutions utilize gravity to provide lubricant to its conduit(s) by providing the lubricant source at a position higher than the parts to be lubricated. A further advantage of the pressurized can is thus that it can be positioned independently of the position of the mechanical device. It is also not in need of a pump or the like to distribute lubricant sufficiently.

The pressurized lubricant source may, for example, be a pressurized can, an aerosol can, a spray can, etc. Such lubricant source may hence be a standard can available on the market, such as e.g. the VBG® MechOil.

According to a further embodiment, the control unit is further configured to perform the lubricating cycle, and provide lubricant to the mechanical device, at a predetermined time interval. Hereby, the mechanical device is controlled in order to be sufficiently lubricated.

Furthermore, the mechanical device should be interpreted as a device comprising movable parts that may be in need of e.g. periodical lubrication or a device that is permanently lubricated but that has a need to be kept free from contamination in order to minimize wear. For example, the mechanical device may be a clutch connection, trailer coupling, industrial machine, agriculture vehicle, etc.

According to yet another embodiment, pressurized gas may be further provided to the mechanical device between the lubricating cycles. Hereby, particles such as e.g. dust or dirt may be forced out on a more regular basis between the lubricating cycles. An advantage is that the time period between each lubricating cycle may be extended since the mechanical device hereby may be kept relatively clean and free from particles. A reduction of lubricant may hence be provided.

According to a still further embodiment, the lubricant arrangement may be arranged to be fitted on a vehicle. An advantage is that the lubricant arrangement may have access to various functionalities of the vehicle. For example, the pressurized gas source of the lubricant arrangement may be the compressed air or a pneumatic system of the vehicle.

Furthermore, the control unit may be connectable to the ignition of the vehicle. Hence, the control unit may thus only be in an active mode of operation when the ignition is activated, i.e. when the control unit detects an activation of ignition.

Still further, the control unit may be adapted to detect an activation of ignition to control the first and second valve in dependence of the ignition activation. Advantages of controlling the first and second valve in dependence of ignition activation, which may e.g. be a predetermined time interval, is that the mechanical device may be lubricated based on an active working period of the vehicle. Hence, the ignition activation is based on the duration of activated ignition. The predetermined time interval is thus independent on if the ignition has been activated and inactivated several times, it is the total elapsed time of activated ignition that is utilized when determining if a lubricating cycle should be started, i.e. the timing of the lubricating cycle is thus governed by the ignition of the vehicle. This may reduce the number of lubricating cycles of the mechanical device, since it may be unnecessary to lubricate the moving parts in the mechanical device when the ignition is turned off and the vehicle thus is not in use. Hereby, a reduction of cost and maintenance of the lubrication arrangement may be achieved.

According to a second aspect of the present invention there is provided a method for cyclically lubricating moving parts in a mechanical device, wherein each lubricating cycle comprises the sequential steps of providing pressurized gas to the mechanical device via a conduit path, providing lubricant to the conduit path, and providing pressurized gas to the conduit path, such that said pressurized gas forces lubricant into the mechanical device.

Advantages of this second aspect are largely analogous to those described above in relation to the first aspect.

Other effects and features of this second aspect are largely analogous to those described above in relation to the first aspect of the present invention.

### Brief description of the drawings

These and other aspects of the present invention will now be described in more detail, with reference to the appended drawings showing exemplary embodiments of the present invention, wherein
Fig. 1 schematically illustrates an embodiment of the lubricant arrangement and the mechanical device according to the present invention;
Fig. 2a illustrates a detailed cross-sectional side view of the lubricant arrangement according to an embodiment of the present invention;
Fig. 2b illustrates the detailed cross-sectional side view perpendicular to Fig. 2a;
Fig. 3 illustrates a cross-sectional side view of an embodiment of a nozzle connected to the mechanical device;
Fig. 4 schematically illustrates an embodiment of the lubricating cycles for lubricating the mechanical device according to the present invention; and
Fig. 5 illustrates an embodiment of a flow chart for lubricating the mechanical device.

### Detailed description of preferred embodiments

In the following description, the present invention is described with reference to an arrangement and corresponding method for lubricating moving parts in a mechanical device, by using a lubricant source and a pressurized gas source. The lubricant source will in the following be described with reference to a pressurized lubrication can and pressurized gas will be described with reference to compressed air of a vehicle system.

It should be noted that this by no means limits the scope of the present invention, which is equally applicable with other lubricant sources. Also, the present invention is not limited to the use of compressed air of the vehicle pneumatic system; any device having pressurized gas is equally applicable to achieve the results of the present invention.

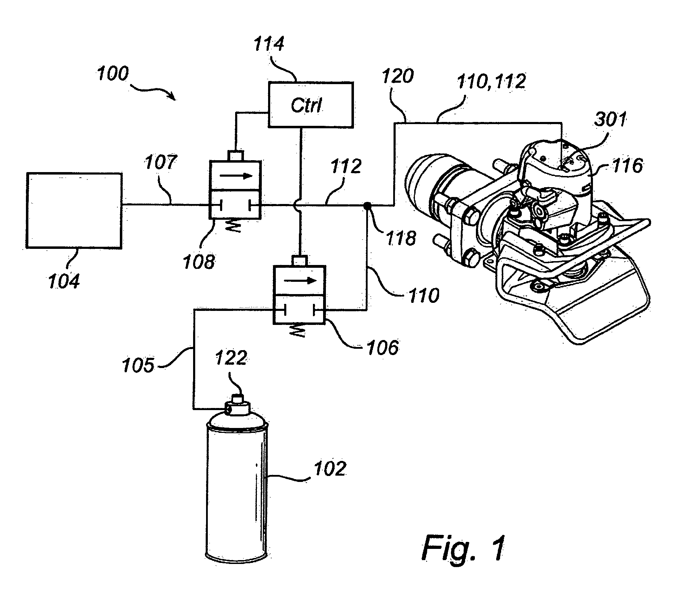

Fig. 1 schematically illustrates an embodiment of the lubricant arrangement 100 according to the present invention, which lubricant arrangement is adapted to be fitted on a vehicle (not shown) to lubricate a mechanical device 116, here illustrated as a coupling device. The lubricant arrangement 100 comprises a lubricant source 102 and a pressurized gas source 104. The lubricant source 102 is in Fig.1 illustrated as a pressurized lubricating can which may be filled with any suitable lubricant, such as a natural oil, synthetic oil, grease, or a powder lubricant such as copper, aluminum, graphite, etc. The pressurized gas source 104 is in Fig. 1 illustrated as a source of compressed air from the vehicle where the lubricant arrangement 100 is fitted.

Moreover, the lubricant source 102 and the pressurized gas source 104 are each coupled to a respective first and second valve 106, 108. The valves 106, 108 are controllable, by means of a control unit 114, to be in an open state or in a closed state, where an open state allows for lubricant or pressurized gas to pass through the respective valves, while a closed state of the valves prevent lubricant or pressurized gas to pass through the respective valves. The first valve 106 is further connected to a mechanical device 116 via a first conduit path 110. In the same manner is the second valve 108 connected to the mechanical device 116 via a second conduit path 112. The first 110 and second 112 conduit paths are arranged to merge at a position 118 downstream from the respective valves 106, 108 forming a common conduit path 120. Hence, the first 110 and second 112 conduit paths are forming one and the same conduit path when being merged at the position 118. The position 118 where the first 110 and second 112 conduit paths merge is hence located at a position along the conduit paths 110, 112 between the mechanical device 116 and the respective valves 106, 108. Hence, the position 118 where the conduit paths 110, 112 coincide may be located adjacent the mechanical device 116 or at a distance there from. The conduit paths should be interpreted as pipes, tubes or channels in which lubricant and/or pressurized gas, such as compressed air, can be provided from its respective source to the mechanical device 116.

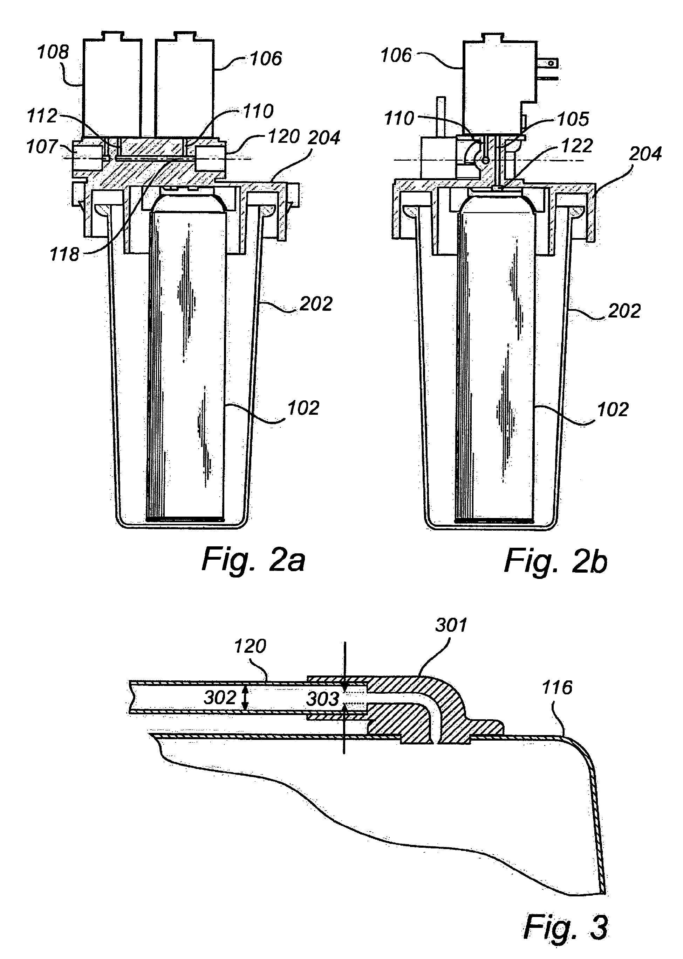

The lubricant arrangement 100 is illustrated in further detail in Figs. 2a and 2b.The lubricating can 102 is connected to the first valve 106 through a lubricant conduit 105 and pressurized gas is provided to the second valve 108 through a pressurized gas conduit 107. Moreover, the lubricating can 102 in the illustrated embodiment of Figs. 2a and 2b is arranged within a housing 202. The housing 202 may be provided in order to protect the lubricating can 102 from e.g. external damages, such as stones flying up from the road or sabotage, etc. The housing 202 may also be provided with thermal insulation in the event the lubricating arrangement is to be used in e.g. cold climate conditions. Furthermore, in the illustrated embodiment of Figs. 2a and 2b the housing 202 is connected to e.g. the framework 204 of a vehicle. The housing 202 may be connected to the framework 204 by, for example, a thread connection or a clip connection. Other suitable connection devices are of course also conceivable.

Furthermore, at the end of the common conduit path 120, i.e. where the common conduit path 120 enters the mechanical device 116, is mounted a nozzle 301, which is illustrated in detail in Fig. 3. A cross sectional area of the nozzle where pressurized gas and/or lubricant are provided has a first input area 302 which is larger than a second input area 303 of the nozzle 301. Hereby, pressurized gas and/or lubricant first enter the first input area 302 and thereafter the second input area 303 before entering the mechanical device 116. Due to the reduction of the cross sectional areas in the nozzle 301, the flow rate of lubricant is increased when entering the second input area 302 thus creating oil mist lubrication into the mechanical device 116.

Still further, in the illustrated embodiment of Figs. 1 -2b, the pressurized lubricating can 102 is arranged in such a way that, when mounted to the first valve 106, it is in a lubricating delivery state, i.e. an actuator 122 of the lubricating can 102 is positioned in an activated state such that lubricant is continuously provided to the first valve 106 by means of a propellant gas in the can. Hereby, lubricant will always be provided to the common conduit path 120, via the first conduit path 110 when the first valve 106 is in an open state.

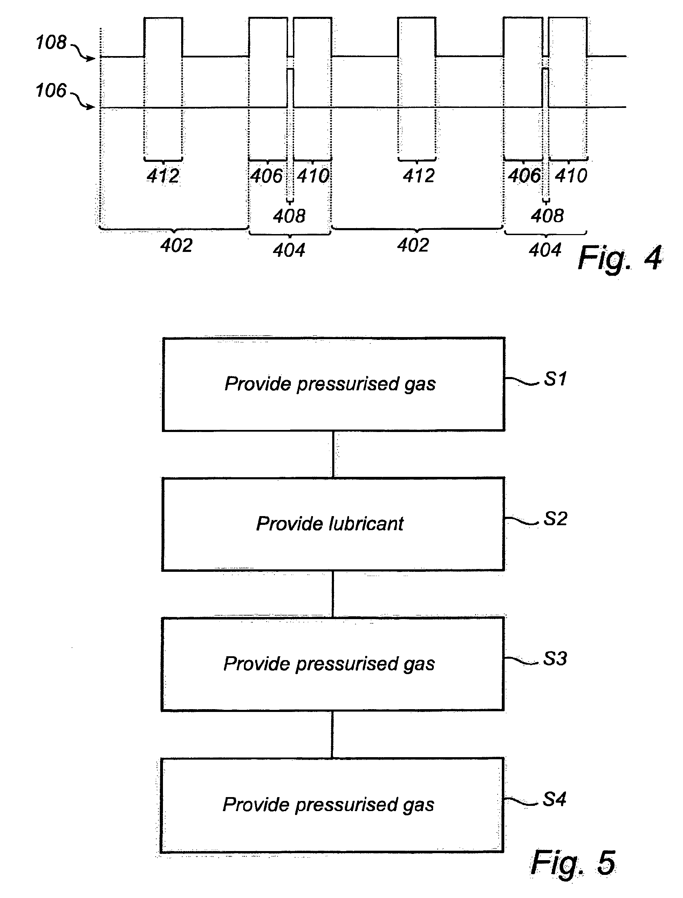

Furthermore, as described above, the control unit 114 is arranged to control the valves 106, 108 to be in a closed state or in an open state, i.e. to allow for lubricant and/or pressurized gas to pass through to the respective first 110 and second 112 conduit paths. The control unit 114 is arranged to be connected to the ignition of the vehicle (not shown) to which the lubricant arrangement is arranged. Hereby, the control unit 114 may receive sufficient power from the vehicle and can also be adapted to be controlled by an elapsed time of activated ignition of the vehicle, which will be describe in more detail below with reference to Fig. 4.

In order to describe the procedure of lubricating the mechanical device 116, reference is now made to Fig. 4 which illustrates an embodiment of the lubricating cycles according to the present invention.

Fig. 4 schematically illustrates the lubricating cycles 404 for lubricating moving parts in the mechanical device 116. The time limit during which the ignition is activated is illustrated on the horizontal line and the opening and closing of the respective valves 106, 108 is illustrated on the vertical line. The initiation of each lubricating cycle 404 is determined by an elapsed time of activated ignition. In other words, a lubricating cycle is started when the ignition of the vehicle has been turned on for a predetermined time. It should be noted that if the ignition of the vehicle is turned off before the lubricating cycle has started, the time until the lubricating cycle is started is also stopped, and thereafter restarted when the ignition is activated. It is hence the elapsed time of activated ignition that determines when a lubricating cycle is initiated.

When the ignition of the vehicle is activated, a first time interval is initiated, which is based on an elapsed time of activated ignition 402, and when a predetermined time has elapsed, the first step 406 of the lubricating cycle 404 is started. When the first step 406 of the lubricating cycle 404 is started, the control unit 114 opens the second valve 108 for a predetermined time, such that pressurized gas is provided to the mechanical device 116 through the second conduit path 112. Hereby, dust particles that have entered the mechanical device 116 may be pressed out by pressurized gas.

Thereafter, when the second valve 108 has been opened for a predetermined time, the second step 408 of the lubricating cycle 404 is started and the control unit 114 is adapted to close the second valve 108 and open the first valve 106. Hereby, lubricant from the pressurized lubricating can 102 may be provided to the common conduit path 120 via the first valve 106 and the first conduit path 110 by means of the propellant gas in the pressurized lubricating can. As the pressurized lubricating can 102 in the illustrated embodiment is, as described above, in a continuous lubricant delivery state, lubricant is delivered to the common conduit path 120 during the predetermined period when the first valve 106 is in an open state. Moreover, when the predetermined period of providing lubricant to the common conduit path 120 has finished, i.e. when a suitable amount of lubricant is provided to the common conduit path 120, the control unit 114 is further arranged to close the first valve 106 and again open the second valve 108, thus initiating the third step 410 of the lubricating cycle 404.

When the third step 410 of the lubricating cycle 404 is started, the control unit 114 is, as described above, arranged to close the first valve 106 and again open the second valve 108. In a similar manner as in the first step 406 of the lubricating cycle 404, pressurized gas is provided through the second valve 108 and the second conduit path 112. Pressurized gas thereafter enters the common conduit path 120 where lubricant received during the second step 408 of the lubricating cycle 404 is provided. Pressurized gas is thus provided to force lubricant through the common conduit path 120 into the mechanical device 116. Hereby, lubricant may be securely provided into the mechanical device 116.

Furthermore, when the lubricating cycle 404 is finished, i.e. when the three steps 406, 408, 410 have been executed, the calculated elapsed time of activated ignition 402 is restarted in order to determine when the next lubricating cycle 404 is to be started.

Moreover, the different predetermined time limits during which the lubricating cycle 404 is provided, i.e. during the elapsed time of activated ignition 402, the first step 406 of providing pressurized gas, the second step 408 of providing lubricant and the third step 410 of providing pressurized gas, of course depend on the specific mechanical device to be lubricated. The time limits may also be dependent on weather- and environmental conditions, but as an example, the different predetermined time limits may be as follows.

The elapsed time of activated ignition 402 before the lubricating cycle is started is approximately 12 hours. Thereafter pressurized gas is provided at the first step 406 of the lubricating cycle 404 for approximately 10 seconds. Lubricant is provided to the common conduit path at the second step 408 of the lubricating cycle 404 for approximately 1 second and finally, pressurized gas is provided at the third step 410 for providing lubricant sufficiently into the mechanical device 116 for approximately 10 seconds.

According to an embodiment of the above described lubricating cycle 404, when the first step 406 is finished and the second step 408 is to be initiated, the control unit 114 may be configured to continue to provide the second valve 108 in an opened state when opening the first valve 106, thus continuously providing pressurized gas to the conduit path while providing lubricant to the common conduit path 120. Hereby, the control unit 114 is arranged to provide the second valve 108 in an opened state during the entire lubricant cycle 404.

Moreover, according to another embodiment of the above described lubricant cycle 404, in the event the position 118 in which the first 110 and second 112 conduit paths merge is located adjacent, or approximately adjacent, the mechanical device 116 in such a way that the propellant gas in the pressurized lubricating can 102 is sufficient for providing lubricant into the mechanical device 116, the third step 410 of the lubricating cycle 404 may not be necessary. Hereby, each lubricating cycles 404 may thus comprise only the first 406 and second 408 steps. The second valve 108 may in this embodiment of course be either in an opened state or a closed state when the first valve 106 is open, i.e. when executing the second step 408 of the lubricating cycle 404.

According to a still further embodiment, a fourth step 412 is provided between each lubricating cycle 404. In this fourth step 412, the control unit 114 is arranged to, during the elapsed time of activated ignition 402, open the second valve 108 such that pressurized gas is provided to the mechanical device 116 via the second 112 and common 120 conduit paths. Hereby, dust particles etc, which have entered the mechanical device, may be pressed out by pressurized gas on a more frequent basis. Also, by introducing the fourth step 412 and thus more frequently removing e.g. dust particles or the like, the elapsed time of activated ignition 402 before starting a lubricating cycle 404 may be extended such that lubricant from the pressurized lubricating can 102 may be provided to the mechanical device 116 less frequently, as the mechanical device 116 may be kept relatively clean and free from particles. Although the fourth step 412 is illustrated and described as being provided only once between each lubricating cycle 404, it should be noted that this fourth step 412 may be provided a plurality of times between the lubricating cycles 404.

In order to summarize the lubricating cycles 404 for lubricating the mechanical device 116 according to the present invention, reference is now made to Fig. 5, illustrating a flow chart of the steps for executing the lubricating cycles 404.

In a first step S1, when the predetermined elapsed time of activated ignition 402 has finished, the control unit 114 is arranged to open the second valve 108 to provide pressurized gas to the mechanical device 116.

Thereafter, in a second step S2, the control unit 116 is arranged to open the first valve 106 in order to provide lubricant from the pressurized lubricating can 102 to the common conduit path 120, either by simultaneously closing the first valve 108 or keeping the first valve 108 in its open state.

In a third step S3, when a sufficient amount of lubricant has been provided to the common conduit path 120, the control unit 114 is arranged to close the first valve 106 and open the second valve 108, if the second valve 108 was closed in the second step S2, such that pressurized gas forces lubricant provided in the common conduit path 120 into the mechanical device 116. After the third step S3 is finished, i.e. when a predetermined time has elapsed, the control unit 114 is arranged to close the second valve 108.

Finally, in a forth step S4, which is an alternative or supplementary step as described above, the control unit 114 is arranged to open the second valve 108 between the lubricating cycles 404 to provide pressurized gas to the mechanical device 116.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage.

The invention has mainly been described above with reference to a few embodiments. However, as is readily appreciated by the skilled addressee, other embodiments than the ones disclosed above are equally possible within the scope of the invention, as defined by the appended patent claims. For example, the invention is also applicable for trucks, buses, dumpers, wheel loaders and other type of vehicles. In fact, the invention does not necessarily have to be fitted to a vehicle at all. The vehicle is just an example having the various features that may be utilized by the present invention.

## Claims

1. A lubricant arrangement (100) for lubricating moving parts in a mechanical device (116), wherein the lubricant arrangement (100) comprises:
a first valve (106) connected to a detachable pressurized lubricant container (102);
a second valve (108) connected to a pressurized gas source (104);
a first conduit path (110) arranged between the first valve (106) and the mechanical device (116), and a second conduit path (112) arranged between the second valve (108) and the mechanical device (116);
wherein said first (110) and second (112) conduit paths merge into a common conduit path (120) at a position (118) downstream of the respective valves (106, 108); and
a control unit (114) configured to control the first (106) and second (108) valve to perform a lubricating cycle including the sequential steps of:
- providing (S1) pressurized gas to said mechanical device (116) via said second conduit path (112);
- providing (S2) lubricant from said detachable pressurized lubricant container to said position (118); and
- providing (S3) pressurized gas to said position (118), such that said pressurized gas forces said lubricant into said mechanical device (116).

2. A lubricant arrangement (100) according to claim 1, wherein the control unit (114) is further configured to perform said lubricating cycle (404), and provide lubricant to said mechanical device (116), at a predetermined time interval.

3. A lubricant arrangement (100) according to any one of the preceding claims, further adapted to be fitted on a vehicle.

4. A lubricant arrangement (100) according to claim 3, wherein the control unit (114) is connectable to the ignition of the vehicle.

5. A lubricant arrangement according to claim 4, wherein said control unit 114 is adapted to detect an activation of ignition to control said first 106 and second 108 valve in dependence of said ignition activation.

6. A method for cyclically lubricating moving parts in a mechanical device (116), using a lubricating arrangement according to any of claims 1 to 5 wherein each lubricating cycle comprises the sequential steps of:
- providing (S1) pressurized gas to said mechanical device (116) via a conduit path (120);
- providing (S2) lubricant from a detachable pressurized lubricant container to said conduit path (120); and
- providing (S3) pressurized gas to said conduit path (120), such that said pressurized gas forces said lubricant into said mechanical device (116).

7. A method according to claim 6, wherein said pressurized gas is provided (S4) to said mechanical device (116) between said lubricating cycles (404).

8. A method according to claim 6 or 7, wherein said lubricating cycle (404) is performed at a predetermined time interval.

9. A method according to any one of claims 6 - 8, wherein the timing of said lubricating cycle is governed by the ignition of the vehicle.

## Patentansprüche

1. Schmiermittelanordnung (100) zum Schmieren der beweglichen Teile in einer mechanischen Vorrichtung (116), wobei die Schmiermittelanordnung (100) Folgendes umfasst:
ein erstes Ventil (106), das an einen abnehmbaren unter Druck stehenden Schmiermittelbehälter (102) angeschlossen ist;
ein zweites Ventil (108), das an eine druckstehende Gasquelle (104) angeschlossen ist;
eine erste Rohrleitung (110), die zwischen dem ersten Ventil (106) und der mechanischen Vorrichtung (116) angeordnet ist, und eine zweite Rohrleitung (112), die zwischen dem zweiten Ventil (108) und der mechanischen Vorrichtung (116) angeordnet ist;
wobei die erste (110) und zweite (112) Rohrleitung sich zu einer gemeinsamen Rohrleitung (120) an einer Position (118) unterhalb der entsprechenden Ventile (106, 108) sich vereinigen; und
eine Steuerungseinheit (114), die dafür ausgelegt ist, das erste (106) und zweite (108) Ventil so zu steuern, dass sie einen Schmierzyklus einschließlich der sequenziellen Schritte von folgenden ausführen:
- Bereitstellen (S1) von unter druckstehendem Gas für die mechanische Vorrichtung (116) über die zweite Rohrleitung (112);
- Bereitstellen (S2) von Schmiermittel aus dem abnehmbaren unter Druck stehenden Schmiermittelbehälter für die Position (118); und
- Bereitstellen (S3) von unter Druck stehenden Gas für die Position (118) derart, dass das unter Druck stehende Gas das Schmiermittel in die mechanische Vorrichtung (116) presst.

2. Schmiermittelanordnung (100) nach Anspruch 1, wobei die Steuerungseinheit (114) ferner dafür ausgelegt ist, den Schmierzyklus (404) auszuführen und Schmiermittel für die mechanische Vorrichtung (116) zu einem vorgegebenen Zeitintervall bereitzustellen.

3. Schmiermittelanordnung (100) nach einem der vorhergehenden Ansprüche, die ferner dafür ausgelegt ist, an einem Fahrzeug angebracht zu werden.

4. Schmiermittelanordnung (100) nach Anspruch 3, wobei die Steuerungseinheit (114) an die Zündung des Fahrzeugs angeschlossen werden kann.

5. Schmiermittelanordnung nach Anspruch 4, wobei die Steuerungseinheit (114) dafür ausgelegt ist, das Aktivieren der Zündung festzustellen, um das erste (106) und zweite (108) Ventil in Abhängigkeit von der Aktivierung der Zündung zu steuern.

6. Verfahren zum zyklischen Schmieren von beweglichen Teilen in einer mechanischen Vorrichtung (116) unter Verwendung einer Schmieranordnung nach einem der Ansprüche 1 bis 5, wobei jeder Schmierzyklus die aufeinanderfolgenden Schritte von folgenden umfasst:
- Bereitstellen (S1) von unter druckstehendem Gas für die mechanische Vorrichtung (116) über eine Rohrleitung (120);
- Bereitstellen (S2) von Schmiermittel von einem abnehmbaren unter Druck stehenden Schmiermittelbehälter für die Rohrleitung (120); und
- Bereitstellen (S3) von unter Druck stehendem Gas für die Rohrleitung (120) derart, dass das unter Druck stehende Gas das Schmiermittel in die mechanische Vorrichtung (116) presst.

7. Verfahren nach Anspruch 6, wobei das unter Druck stehende Gas für die mechanische Vorrichtung (116) zwischen Schmierzyklen (404) zugeführt (S4) wird.

8. Verfahren nach Anspruch 6 oder 7, wobei der Schmierzyklus (404) zu einem bestimmten Zeitintervall ausgeführt wird.

9. Verfahren nach einem der Ansprüche 6 - 8, wobei der Zeitablauf des Schmierzyklus durch die Zündung des Fahrzeugs bestimmt wird.

## Revendications

1. Dispositif de lubrification (100) pour lubrifier des pièces mobiles dans un dispositif mécanique (116), ce dispositif de lubrification (100) comprenant :
une première vanne (106) connectée à un contenant de lubrifiant pressurisé (102) ;
une seconde vanne (108) connectée à une source de gaz pressurisé (104) ;
un premier passage de conduite (110) disposé entre la première vanne (106) et le dispositif mécanique (116) et un second passage de conduite (112) disposé entre la seconde vanne (108) et le dispositif mécanique (116) ;
dans lequel lesdits premier (110) et second (112) passages de conduite fusionnent en un passage de conduite commun (120) à une position (118) située en aval des vannes respectives (106,108) ; et
une unité de commande (114) configurée pour commander les première (106) et seconde (108) vannes pour réaliser un cycle de lubrification comprenant les étapes séquentielles de :
- fourniture (S1) de gaz pressurisé audit dispositif mécanique (116) via ledit second passage de conduite (112) ;
- fourniture (S2) de lubrifiant depuis ledit contenant de lubrifiant pressurisé détachable à ladite position (118) ; et
- fourniture (S3) de gaz pressurisé à ladite position (118), de sorte que ledit gaz pressurisé force ledit lubrifiant à rentrer dans ledit dispositif mécanique (116).

2. Dispositif de lubrification (100) selon la revendication 1, dans lequel l'unité de commande (114) est en outre configurée pour réaliser ledit cycle de lubrification (404) et fournir du lubrifiant audit dispositif mécanique (116) avec une périodicité prédéterminée.

3. Dispositif de lubrification (100) selon l'une quelconque des revendications précédentes, en outre apte à être monté sur un véhicule.

4. Dispositif de lubrification (100) selon la revendication 3, dans lequel l'unité de commande (114) est connectable à l'allumage du véhicule.

5. Dispositif de lubrification selon la revendication 4, dans lequel ladite unité de commande (114) est apte à détecter une activation de l'allumage pour commander lesdites première (106) et seconde (108) vannes en fonction de ladite activation d'allumage.

6. Procédé de lubrification cyclique de pièces mobiles dans un dispositif mécanique (116) en utilisant un dispositif de lubrification selon l'une quelconque des revendications 1 à 5, dans lequel chaque cycle de lubrification comprend les étapes séquentielles de :
- fourniture (S1) de gaz pressurisé audit dispositif mécanique (116) via un passage de conduite (120) ;
- fourniture (S2) de lubrifiant depuis un contenant de lubrifiant pressurisé détachable audit passage de conduite (120) ; et
- fourniture (S3) de gaz pressurisé audit passage de conduite (120), de sorte que ledit gaz pressurisé force ledit lubrifiant à rentrer dans ledit dispositif mécanique (116).

7. Procédé selon la revendication 6, dans lequel ledit gaz pressurisé est fourni (S4) audit dispositif mécanique (116) entre lesdits cycles de lubrification (404).

8. Procédé selon la revendication 6 ou 7, dans lequel ledit cycle de lubrification (404) est réalisé avec une périodicité prédéterminée.

9. Procédé selon l'une quelconque des revendications 6 - 8, dans lequel la temporisation dudit site de lubrification est régie par l'allumage du véhicule.
